# EUROPEAN PATENT APPLICATION

(11) **EP 4 498 577 A1**
(43) Date of publication of application: **29.01.2025**
(21) Application number: 24189042.5
(22) Date of filing: 17.07.2024
(51) Int. Cl.: H02K 3/18, H02K 3/28, H02K 19/12

(54) **WOUND FIELD ROTATING ELECTRICAL MACHINE**

(30) Priority: 26.07.2023 JP 2023121213
(71) Applicant: Aisin Corporation, Aichi 448-8650 (JP)
(72) Inventor: MIYOSHI, Yoichi, Kariya, 448-8650 (JP); KOGA, Kiyotaka, Kariya, 448-8650 (JP); YASUGI, Kazuhiro, Kariya, 448-8650 (JP)
(74) Representative: Kramer Barske Schmidtchen Patentanwälte PartG mbB

(57) **Abstract**

A wound field rotating electrical machine includes: a stator (101); and a rotor (102) disposed to face the stator in a radial direction. The rotor includes a rotor core (2) including a plurality of teeth (20) and a plurality of slots (21) disposed in a circumferential direction, and a coil (3) as a field winding wound around each of the teeth. The coil includes a one side crossover wire (32) disposed along a one side end surface (2a) of the rotor core in an axial direction and connecting two first winding portions wound respectively in a concentrated manner around two of the teeth which are not adjacent to each other, and an other side crossover wire (33) disposed along an other side end surface (2b) of the rotor core in the axial direction and connecting two second winding portions that are different from the first winding portions and that are wound respectively in a concentrated manner around two of the teeth which are not adjacent to each other.

## Description

### TECHNICAL FIELD

This disclosure relates to a wound field rotating electrical machine.

### BACKGROUND DISCUSSION

In the related art, a wound field rotating electrical machine including a coil which is wound in a concentrated manner around each of teeth of a rotor core is known (for example, see JP 11-18337A (Reference 1)).

Reference 1 discloses a wound field rotating electrical machine including a stator and a rotor in which a coil as a field winding is wound in a concentrated manner around respective pole cores (teeth).

Here, although not clearly described in Reference 1, in the field of the wound field rotating electrical machines, winding portions where the coil is wound in a concentrated manner around each of the teeth are connected by a crossover wire disposed along a one side end surface of the rotor core in an axial direction. When the rotor includes a plurality of crossover wires positioned on the one side end surface of the rotor core in the axial direction, the crossover wires may come into contact with one another on the one side end surface of the rotor core in the axial direction. In such a case, it is necessary to increase a thickness of a coil film to ensure insulation between the crossover wires. When the thickness of the coil film increases, a space factor of a conductor in a slot is reduced, and thus improvement is desired.

A need thus exists for a wound field rotating electrical machine capable of improving a space factor of a conductor in a slot by thinning a coil film while ensuring insulation between crossover wires.

### SUMMARY

According to an aspect of this disclosure, a wound field rotating electrical machine includes: a stator; and a rotor disposed to face the stator in a radial direction. The rotor includes a rotor core including a plurality of teeth and a plurality of slots disposed in a circumferential direction, and a coil as a field winding wound around each of the teeth. The coil includes a one side crossover wire disposed along a one side end surface of the rotor core in an axial direction and connecting two first winding portions wound in a concentrated manner around two of the teeth which are not adjacent to each other, and an other side crossover wire disposed along an other side end surface of the rotor core in the axial direction and connecting two second winding portions that are different from the first winding portions and that are wound respectively in a concentrated manner around two of the teeth which are not adjacent to each other.

In the wound field rotating electrical machine according to the aspect disclosed here, as described above, the coil is provided with the one side crossover wire disposed along the one side end surface of the rotor core in the axial direction and connecting the two first winding portions that are wound respectively in a concentrated manner around the two teeth which are not adjacent to each other, and the other side crossover wire disposed along the other side end surface of the rotor core in the axial direction and connecting the two second winding portions that are wound in a concentrated manner around each of the two teeth which are not adjacent to each other. Accordingly, the crossover wires, which are disposed only on one side in the axial direction of the rotor core in the related art, can be dispersedly disposed on both sides in the axial direction by the one side crossover wire disposed on one side in the axial direction of the rotor core and the other side crossover wire disposed on the other side in the axial direction of the rotor core, and thus it is possible to avoid contact of the crossover wires. Therefore, it is not necessary to consider ensuring insulation at a position where the crossover wires are in contact with each other, and thus it is possible to improve a space factor of a conductor in the slot by thinning the coil film while ensuring the insulation between the crossover wires (the one side crossover wire and the other side crossover wire). In addition, as the space factor of the conductor in the slot is improved, it is possible to reduce a size of a motor (rotor) in the axial direction to implement minimization when the same performance is obtained. That is, a total thickness of a plurality of electromagnetic steel sheets stacked to form the rotor core can be reduced.

In the wound field rotating electrical machine according to the above aspect, the coil may include a plurality of one side crossover wires and a plurality of other side crossover wires, and is a single continuous coil wound around the plurality of teeth, and the coil may be formed such that the first winding portions and the one side crossover wires are alternately and continuously formed between a one end lead portion introduced to one of the teeth as a winding start of the coil and a predetermined halfway position of the coil, and the second winding portions and the other side crossover wires are alternately and continuously formed between an other end lead portion led out from one of the teeth as a winding end of the coil and the predetermined halfway position of the coil.

According to such a configuration, the number of components can be reduced and a device configuration can be simplified as compared with a case where there are a plurality of coils. Further, winding work of the coil can be performed only by alternately repeating formation of the first winding portions and the one side crossover wires on the one end lead portion side, and the winding work of the coil can be performed only by alternately repeating formation of the second winding portions and the other side crossover wires on the other end lead portion side. That is, since a work stage for forming the one side crossover wire and a work stage for forming the other side crossover wire can be separated, workability can be improved as compared with a case where the winding portion, the one side crossover wire, and the other side crossover wire are repeatedly formed.

In this case, the tooth around which the one end lead portion is wound and the tooth around which the other end lead portion is wound may be disposed to be apart from each other in the circumferential direction with at least one of the teeth interposed therebetween.

According to such a configuration, in the coil, the one end lead portion and the other end lead portion having a particularly large voltage difference due to internal resistance of the coil caused by a large coil length therebetween can be apart from each other with at least one tooth interposed therebetween to ensure the insulation.

In the above configuration in which the coil is a single continuous coil wound around the plurality of teeth, the teeth may include a first tooth and a second tooth adjacent to each other, the slots may include an intermediate slot disposed between the first tooth and the second tooth, the coil may be wound around the first tooth such that the number of turns on an intermediate slot side in the circumferential direction of the first tooth is larger by one than the number of turns on a side opposite to the intermediate slot side in the circumferential direction of the first tooth, the coil may be wound around the second tooth such that the number of turns on the intermediate slot side in the circumferential direction of the second tooth is smaller by one than the number of turns on the side opposite to the intermediate slot side in the circumferential direction of the second tooth, and the number of turns on the side opposite to the intermediate slot side in the circumferential direction of the first tooth may be equal to the number of turns on the side opposite to the intermediate slot side in the circumferential direction of the second tooth.

According to such a configuration, when the coil is led out from one side to the other side in the axial direction in order to form not only the one side crossover wire but also the other side crossover wire, the number of turns of the winding portion on the first tooth on one side in the circumferential direction (intermediate slot side) is different from that on the other side in the circumferential direction, but a total number of turns in the intermediate slot can be matched with a total number of turns in each of other slots by making the number of turns of the winding portion on the second tooth on one side in the circumferential direction also different from that on the other side in the circumferential direction (intermediate slot side). In short, a deviation in the number of turns in the intermediate slot in the winding portion on the first tooth can be corrected by a deviation in the number of turns in the intermediate slot in the winding portion on the second tooth. As a result, it is possible to prevent a balance during rotation of the rotor from collapsing.

Regarding the above wound field rotating electrical machine, the following configuration is also conceivable.

### Appendix 1

In the above wound field rotating electrical machine, it is preferable that the one side crossover wire is connected to the winding portion on the first tooth from the one side end surface side in the axial direction and the intermediate slot side in the circumferential direction, the other side crossover wire is connected to the winding portion on the first tooth from the other side end surface side in the axial direction and the intermediate slot side in the circumferential direction, the one end lead portion or the other end lead portion is connected to the winding portion on the second tooth from the one side end surface side in the axial direction and the side opposite to the intermediate slot side in the circumferential direction, and the other side crossover wire is connected to the winding portion on the second tooth from the other side end surface side in the axial direction and the side opposite to the intermediate slot side in the circumferential direction.

According to such a configuration, the deviation in the number of turns in the intermediate slot in the winding portion on the first tooth is corrected by that in the winding portion on the second tooth to which the one end lead portion or the other end lead portion is connected, and it is possible to prevent the balance during the rotation of the rotor from collapsing.

### Appendix 2

In the above configuration in which the coil is a single continuous coil wound around the plurality of teeth, it is preferable that the plurality of one side crossover wires are disposed on the one side end surface side in the axial direction so as to be apart from each other without contacting each other, and the plurality of the other side crossover wires are disposed on the other side end surface side in the axial direction so as to be apart from each other without contacting each other.

According to such a configuration, since the insulation between the plurality of one side crossover wires and the insulation between the plurality of the other side crossover wires can be ensured, it is possible to further improve the space factor of the conductor in the slot by further thinning the coil film while ensuring the insulation between the crossover wires.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a view showing a rotor and a stator of a wound field rotating electrical machine according to an embodiment viewed from a radial direction;
FIG. 2 is a partially enlarged view showing a cross section of a slot and a coil of the rotor of the wound field rotating electrical machine according to the embodiment viewed from one side in an axial direction;
FIG. 3 is a view showing a portion (winding-start-side portion) including a one side crossover wire of the coil of the wound field rotating electrical machine according to the embodiment viewed from the one side in the axial direction;
FIG. 4 is a view showing a portion (winding-end-side portion) including an other side crossover wire of the coil of the wound field rotating electrical machine according to the embodiment viewed from the one side in the axial direction; and
FIG. 5 is a schematic view showing a method of winding a coil around each tooth of the wound field rotating electrical machine according to the embodiment.

### DETAILED DESCRIPTION

Hereinafter, an embodiment will be described with reference to the drawings.

### Embodiment

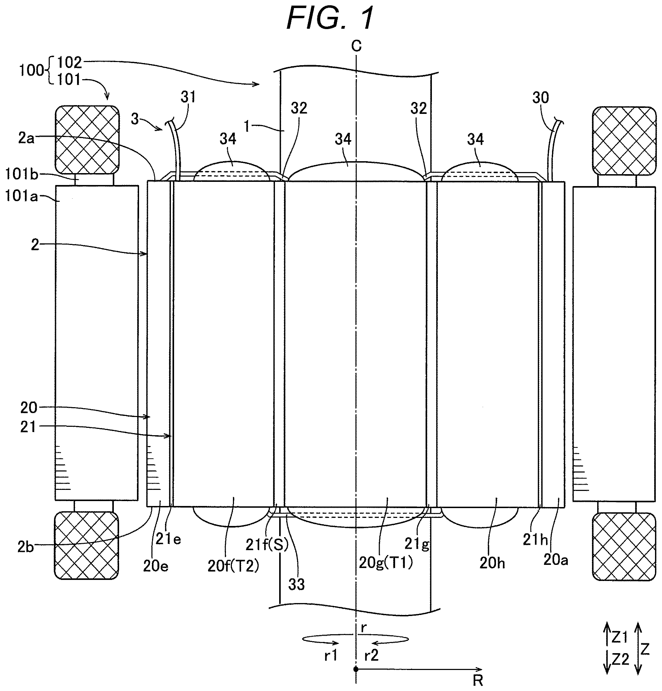

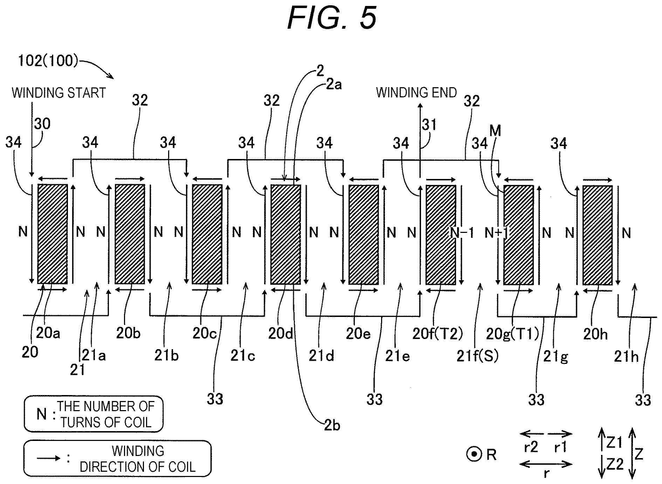

A wound field rotating electrical machine 100 according to an embodiment will be described with reference to FIGS. 1 to 5.

In each drawing, an axial direction of a rotor shaft 1 is shown as a Z direction. The Z direction is a direction along a rotation center axis C of the rotor shaft 1. One side of the Z direction is indicated by a Z1 direction, and the other side is indicated by a Z2 direction. A one side end surface 2a of a rotor core 2 in the axial direction is positioned on a Z1 direction side of a rotor 102. An other side end surface 2b of the rotor core 2 in the axial direction is positioned on a Z2 direction side of the rotor 102.

In each drawing, a radial direction of the rotor shaft 1 is shown as an R direction. The R direction is also a radial direction of the rotor 102. As a matter of course, the R direction is a direction coinciding with a diameter direction of the rotor 102.

In each drawing, a circumferential direction of the rotor shaft 1 is indicated by an r direction. One side of the r direction is indicated by an r1 direction, and the other side is indicated by an r2 direction. The r1 direction is a counterclockwise direction when the rotor 102 is viewed from the Z1 direction side, and the r2 direction is a clockwise direction. A coil 3 of the rotor 102 is sequentially wound around a plurality of teeth 20a to 20f so as to move in the r1 direction from the tooth 20a as a winding start position toward the tooth 20f as a winding end position. An order of winding the coil 3, and the like will be described in detail later.

As shown in FIG. 1, the wound field rotating electrical machine 100 includes a stator 101 and the rotor 102.

The rotor 102 is disposed so as to face the stator 101 in the radial direction. More specifically, the rotor 102 is disposed inward of the stator 101 in the radial direction so as to face the stator 101 with a predetermined gap therebetween. That is, the wound field rotating electrical machine 100 is a radial gap type rotating electrical machine. In addition, the wound field rotating electrical machine 100 is an inner rotor type rotating electrical machine.

The wound field rotating electrical machine 100 is an electrically excited synchronous motor (EESM) including the winding (coil) type rotor 102. The coil 3 (winding), which is a field winding of the rotor 102, is configured to generate a magnetic field when being supplied with a current via a brush and a slip ring. The rotor 102 is not provided with a permanent magnet and functions as an electromagnet.

### Configuration of Stator

The stator 101 includes an annular stator core 101a, and a coil 101b disposed on the stator core 101a.

The stator core 101a includes a plurality of electromagnetic steel sheets stacked in the axial direction (Z direction), and is configured to allow magnetic flux to pass therethrough. The coil 101b of the stator 101 is connected to an external power supply unit, and is configured to be supplied with a current (for example, a three-phase alternating current). The coil 101b of the stator 101 is configured to generate a magnetic field when being supplied with the current.

### Configuration of Rotor

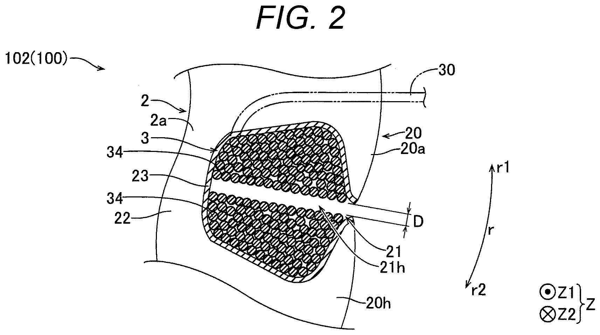

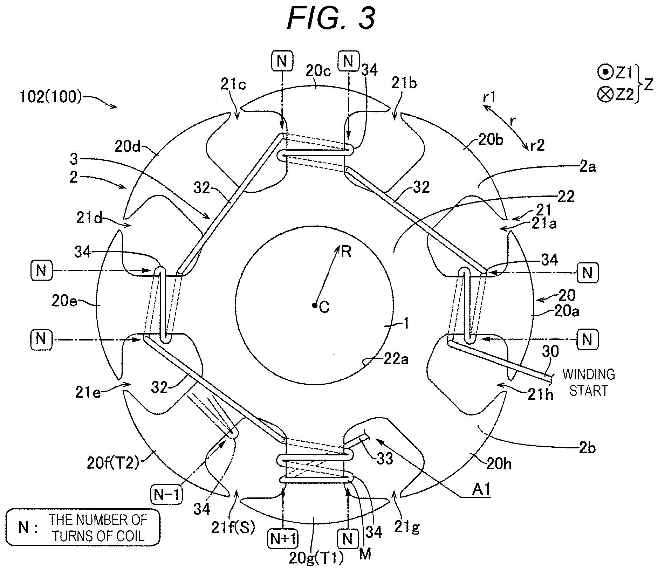

As shown in FIG. 1, the rotor 102 includes the rotor shaft 1, the rotor core 2, and the coil 3 as a field winding wound around each of the teeth 20a to 20h (see FIGS. 2 and 3) of the rotor core 2.

### Configuration of Rotor Shaft of Rotor

The rotor shaft 1 is a shaft portion serving as a rotation center of the wound field rotating electrical machine 100. The rotor shaft 1 is formed in a round rod shape having a circular outer circumferential surface. The rotor shaft 1 is inserted into a shaft insertion hole 22a (see FIG. 3) of the rotor core 2.

### Configuration of Rotor Core of Rotor

The rotor core 2 includes a plurality of electromagnetic steel sheets stacked in the axial direction (Z direction) and is configured to allow magnetic flux to pass therethrough.

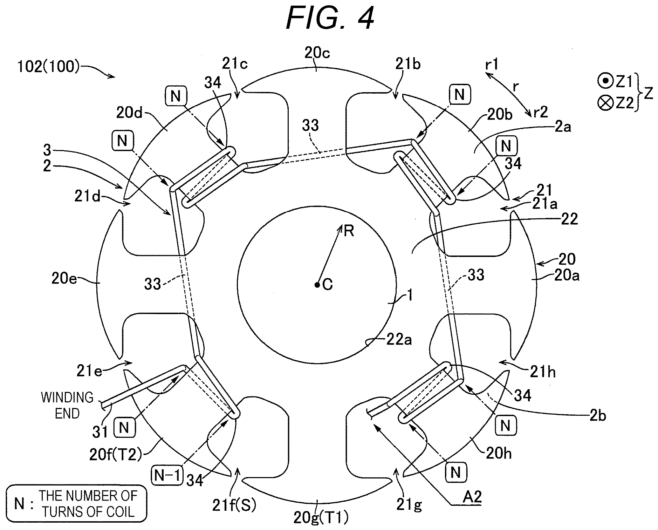

As shown in FIGS. 3 and 4, the rotor core 2 includes a plurality of (eight) teeth 20 (20a to 20h) disposed in the circumferential direction (r direction), a plurality of (eight) slots 21 (21a to 21h) disposed in the circumferential direction, and an annular portion 22.

Here, in the description of the present embodiment, when a generic term of the plurality of teeth or any unspecified one of the plurality of teeth is indicated, the tooth 20 is used. When any specified one of the plurality of teeth is indicated, the teeth 20a to 20h are used.

Similarly, in the description of the present embodiment, when a generic term of the plurality of slots or any unspecified one of the plurality of slots is indicated, the slot 21 is used. When any specified one of the plurality of slots is indicated, the slots 21a to 21h are used.

The annular portion 22 is provided with the shaft insertion hole 22a, and extends along the outer circumferential surface of the rotor shaft 1.

The teeth 20a to 20h protrude outward from the annular portion 22 in the radial direction. The teeth 20a to 20h are disposed at equal angular intervals in the circumferential direction. The teeth 20a to 20h are disposed adjacent to one another in the r1 direction in an order of the teeth 20a, 20b, 20c, 20d, 20e, 20f, 20g, and 20h when viewed from one side in the axial direction. The tooth 20h is adjacent to an r2 direction side of the tooth 20a.

Here, the tooth 20 includes a first tooth T1 and a second tooth T2 adjacent to each other. The first tooth T1 and the second tooth T2 correspond to the tooth 20g and tooth 20f, respectively. Details of the first tooth T1 and the second tooth T2 will be described later.

The slot 21 is a space portion sandwiched between two teeth 20 adjacent to each other in the circumferential direction, and is a space extending in the axial direction with respect to the rotor core 2 and allowing the coil 3 to pass through. The slots 21a to 21h are disposed adjacent to one another in the r1 direction in an order of the slots 21a, 21b, 21c, 21d, 21e, 21f, 21g, and 21h when viewed from one side in the axial direction. The slots 21a to 21h are disposed adjacent to the r1 direction sides of the teeth 20a to 20h, respectively.

Here, the slot 21 includes an intermediate slot S disposed between the first tooth T1 (tooth 20g) and the second tooth T2 (tooth 20f). The intermediate slot S corresponds to the slot 21f. Details of the intermediate slot S will be described later.

### Configuration of Coil of Rotor

The coil 3 is a single continuous coil wound around the plurality of teeth 20a to 20h. Therefore, the wound field rotating electrical machine 100 is provided with only two lead portions (a one end lead portion 30 and an other end lead portion 31). As an example, the coil 3 is a so-called round wire whose cross section orthogonal to a longitudinal direction is rounded. The coil 3 includes a conductor formed of a conductive member and a coil film formed of an insulation material and covering the conductor. As a thickness of the coil film reduces, a space factor of the conductor in the slot 21 is improved.

In the slot 21, insulation of the coil 3 from the rotor core 2 is ensured by a slot sheet 23 (see FIG. 2). In addition, regarding the coil 3, in one slot 21 disposed between two of the teeth 20, in order to ensure insulation between a winding portion 34 wound around one tooth 20 and the winding portion 34 wound around the other tooth 20, a predetermined insulation distance D (creepage distance or clearance distance) (see FIG. 2) is ensured. Regarding the coil, a predetermined insulating member may be disposed between the winding portion wound around the one tooth and the winding portion wound around the other tooth.

The coil 3 is wound around each tooth 20 in order in manner of a so-called concentrated winding. Therefore, the coil 3 forms the winding portions 34 that are wound around the respective teeth 20 in a concentrated manner. The winding portion 34 is a portion where the coil 3 is wound around each tooth 20 in an annular shape in the manner of concentrated winding.

The coil 3 includes one side crossover wires 32 and other side crossover wires 33. The coil 3 includes a plurality of one side crossover wires 32 and a plurality of other side crossover wires 33.

The one side crossover wires 32 are disposed along the one side end surface 2a (end surface in the Z1 direction) of the rotor core 2 in the axial direction, and each connects two winding portions 34 that are wound around two teeth 20 in a concentrated manner. The other side crossover wires 33 are disposed along the other side end surface 2b (end surface in the Z2 direction) of the rotor core 2 in the axial direction, and each connects two winding portions 34 that are wound around two teeth 20 in a concentrated manner.

The plurality of one side crossover wires 32 are disposed on the one side end surface 2a side (Z1 direction side) in the axial direction so as to be apart from one another without contacting one another. The plurality of one side crossover wires 32 are disposed apart from one another in the circumferential direction. In short, the plurality of one side crossover wires 32 do not contact one another to ensure the insulation.

In addition, the plurality of the other side crossover wires 33 are disposed on the other side end surface 2b side (Z2 direction side) in the axial direction so as to be apart from one another without contacting one another. The plurality of the other side crossover wires 33 are disposed apart from one another in the circumferential direction. In short, the plurality of the other side crossover wires 33 do not contact one another to ensure the insulation.

In the coil 3, the winding portions 34 and the one side crossover wires 32 are formed alternately and continuously between the one end lead portion 30 introduced into the tooth 20a as a winding start of the coil 3 and a predetermined halfway position M of the coil 3. In the coil 3, the winding portions 34 and the other side crossover wires 33 are formed alternately and continuously between the other end lead portion 31 led out of the tooth 20f as a winding end of the coil 3 and the predetermined halfway position M of the coil 3. The above "predetermined halfway position M of the coil 3" is the winding portion 34 wound around the tooth 20g.

In short, in one coil 3, a portion on the one end lead portion 30 side in the longitudinal direction is used to form the winding portions 34 and the one side crossover wires 32, and a portion on the other end lead portion 31 side in the longitudinal direction is used to form the winding portions 34 and the other side crossover wires 33.

The tooth 20a around which the one end lead portion 30 is wound and the tooth 20f around which the other end lead portion 31 is wound are disposed to be apart from each other in the circumferential direction (r direction) with at least one tooth 20 interposed therebetween. The one end lead portion 30 and the other end lead portion 31 are disposed on sides opposite to each other in the diameter direction (radial direction (R direction)) of the rotor 102.

Specifically, the tooth 20a around which the one end lead portion 30 is wound and the tooth 20f around which the other end lead portion 31 is wound are disposed to be apart from each other in the circumferential direction with the teeth 20g and 20h interposed therebetween.

In short, since positions of the winding portion 34 on the tooth 20a as the winding start and the winding portion 34 on the tooth 20f as the winding end in the longitudinal direction of the coil 3 are largely apart from each other, a potential difference therebetween is particularly large due to an influence of internal resistance of the coil 3. Therefore, the coil 3 is configured such that the winding portion 34 on the tooth 20a as the winding start and the winding portion 34 on the tooth 20f as the winding end are not disposed close to each other in the circumferential direction (r direction), but disposed relatively far from each other.

### Method of Winding Coil around Each Tooth of Rotor

Next, a method of winding the coil 3 around each of the teeth 20a to 20h of the rotor 102 will be described with reference to FIGS. 2, 3, and 5.

The description will be made assuming that the number of turns of the winding portion 34 is N. The number of turns N means the number of coil portions (slot accommodating portions) on one side of the teeth 20. A total number of turns in each of the slots 21a to 21h is 2 × N. If only the number of turns in one slot is slightly different from all the other numbers of turns, a magnetic and mechanical balance of the rotor in the circumferential direction collapses. Therefore, when the rotor rotates, abnormal noise, vibration, and the like are generated, which is not preferable.

In FIGS. 3 and 4, the number of turns N of the coil 3 is assumed to be two in order to simplify the drawings and facilitate understanding. Actually, as shown in FIG. 2, the number of turns of the coil 3 is larger than the number of turns N shown in FIGS. 3 and 4.

In addition, although FIGS. 3 and 4, which are diagrams showing the rotor 102 viewed from the axial direction, can be shown in one drawing, in order to reduce overlapping of the coil 3 and facilitate understanding, the rotor 102 is shown in two separate drawings. The coil 3 is continuous between a portion A1 shown in FIG. 3 and a portion A2 shown in FIG. 4.

Here, an order of the teeth 20 around which the coil 3 is wound is the tooth 20a as the winding start, the tooth 20c, the tooth 20e, the tooth 20g (first tooth T1), the tooth 20h, the tooth 20b, the tooth 20d, and the tooth 20f (second tooth T2) as the winding end.

The coil 3 is wound around the teeth 20 such that winding directions of the coil 3 in one slot 21 are the same. In short, when the rotor 102 is viewed from an outer side in the radial direction, the winding directions of the winding portions 34 of the coil 3 on the teeth 20a, 20c, 20e, and 20g are all the counterclockwise direction, and the winding directions of the winding portions 34 on the teeth 20b, 20d, 20f, and 20h are all the clockwise direction. As a result, the coil portions (slot accommodating portions) in the adjacent slots 21 form magnetic fields in opposite directions alternately in the circumferential direction.

Hereinafter, steps from the winding start of the coil 3 to the winding end will be described in order.

First, the one end lead portion 30 is introduced to the tooth 20a from the Z1 direction side and is wound in a concentrated manner, and thus the winding portion 34 is formed on the tooth 20a.

Next, the one side crossover wire 32 connecting the teeth 20a and 20c is formed along the one side end surface 2a (Z1 direction) of the rotor core 2.

Next, the coil 3 from the one side crossover wire 32 is introduced to the tooth 20c from the Z1 direction side and is wound in a concentrated manner, and thus the winding portion 34 is formed on the tooth 20c.

Next, the one side crossover wire 32 connecting the teeth 20c and 20e is formed along the one side end surface 2a of the rotor core 2.

Next, the coil 3 from the one side crossover wire 32 is introduced to the tooth 20e from the Z1 direction side and is wound in a concentrated manner, and thus the winding portion 34 is formed on the tooth 20e.

Next, the one side crossover wire 32 connecting the teeth 20e and 20g (first tooth T1) is formed along the one side end surface 2a of the rotor core 2.

Next, the coil 3 from the one side crossover wire 32 is introduced to the tooth 20g (first tooth T1) from the Z1 direction side and is wound in a concentrated manner, and thus the winding portion 34 is formed on the tooth 20g.

At this time, the coil 3 is wound around the first tooth T1 such that the number of turns on an intermediate slot S (slot 21f) side in the circumferential direction of the first tooth T1 is larger by one than the number of turns on a side opposite to the intermediate slot S side in the circumferential direction of the first tooth T1. Specifically, the number of turns on the intermediate slot S side in the circumferential direction of the first tooth T1 is set to N + 1, and the number of turns on the side opposite to the intermediate slot S side in the circumferential direction of the first tooth T1 is set to N.

Therefore, the coil 3 is led out from the winding portion 34 on the tooth 20g (first tooth T1) to the Z2 direction side. In short, the one side crossover wire 32 is connected to the winding portion 34 on the first tooth T1 from the one side end surface 2a side in the axial direction and the intermediate slot S side in the circumferential direction, and the other side crossover wire 33 is connected to the winding portion 34 on the first tooth T1 from the other side end surface 2b side in the axial direction and the intermediate slot S side in the circumferential direction. In this manner, the coil 3 is connected to the winding portion 34 (predetermined halfway position M of the coil 3) on the first tooth T1 from both sides in the axial direction.

Next, the other side crossover wire 33 connecting the tooth 20g (first tooth T1) and the tooth 20h is formed along the other side end surface 2b of the rotor core 2.

Next, the coil 3 from the other side crossover wire 33 is introduced to the tooth 20h from the Z2 direction side and is wound in a concentrated manner, and thus the winding portion 34 is formed on the tooth 20h.

Next, the other side crossover wire 33 connecting the tooth 20h and the tooth 20b is formed along the other side end surface 2b of the rotor core 2.

Next, the coil 3 from the other side crossover wire 33 is introduced to the tooth 20b from the Z2 direction side and is wound in a concentrated manner, and thus the winding portion 34 is formed on the tooth 20b.

Next, the other side crossover wire 33 connecting the tooth 20b and the tooth 20d is formed along the other side end surface 2b of the rotor core 2.

Next, the coil 3 from the other side crossover wire 33 is introduced to the tooth 20d from the Z2 direction side and is wound in a concentrated manner, and thus the winding portion 34 is formed on the tooth 20d.

Next, the other side crossover wire 33 connecting the tooth 20d and the tooth 20f is formed along the other side end surface 2b of the rotor core 2.

Next, the coil 3 from the other side crossover wire 33 is introduced to the tooth 20f (second tooth T2) from the Z2 direction side and is wound in a concentrated manner, and thus the winding portion 34 is formed on the tooth 20f.

At this time, the coil 3 is wound around the second tooth T2 such that the number of turns on the intermediate slot S (slot 21f) side in the circumferential direction of the second tooth T2 is smaller by one than the number of turns on the side opposite to the intermediate slot S side in the circumferential direction of the second tooth T2. Specifically, the number of turns on the intermediate slot S side in the circumferential direction of the second tooth T2 is set to N -1, and the number of turns on the side opposite to the intermediate slot S side in the circumferential direction of the second tooth T2 is set to N.

Therefore, the coil 3 is led out from the winding portion 34 on the tooth 20f (second tooth T2) to the Z1 direction side. In short, the other end lead portion 31 is connected to the winding portion 34 on the second tooth T2 from the one side end surface 2a side in the axial direction and the side opposite to the intermediate slot S side in the circumferential direction, and the other side crossover wire 33 is connected to the winding portion 34 on the second tooth T2 from the other side end surface 2b side in the axial direction and the side opposite to the intermediate slot S side in the circumferential direction. In this manner, the coil 3 is connected to the winding portion 34 on the second tooth T2 from both sides in the axial direction.

The other end lead portion 31 is led out from the second tooth T2, and thus the winding ends.

Here, a total number of turns of the coil 3 in the intermediate slot S (slot 21f) is considered. As described above, the number of turns on the intermediate slot S side in the circumferential direction of the first tooth T1 is N + 1. In addition, as described above, the number of turns on the intermediate slot S side in the circumferential direction of the second tooth T2 is N -1. Therefore, the total number of turns of the coil 3 in the intermediate slot S is (N + 1) + (N - 1) = 2 × N. The total number of turns of the coil 3 in all the slots 21 other than the intermediate slot S is also 2 × N.

The number of turns on the side opposite to the intermediate slot S side in the circumferential direction of the first tooth T1 is equal to the number of turns on the side opposite to the intermediate slot S side in the circumferential direction of the second tooth T2 (both are N).

### Effects of Embodiment

In the present embodiment, the following effects can be obtained.

In the present embodiment, as described above, the coil 3 is provided with the one side crossover wires 32 each of which is disposed along the one side end surface 2a of the rotor core 2 in the axial direction and connects two winding portions 34 ("first winding portions" in Claims) that are respectively wound in a concentrated manner around two teeth 20 that are not adjacent to each other, and the other side crossover wires 33 each of which is disposed along the other side end surface 2b of the rotor core 2 in the axial direction and connects two winding portions 34 ("second winding portions" in Claims) that are respectively wound in a concentrated manner around two teeth 20 that are not adjacent to each other. Accordingly, the crossover wires, which are disposed only on one side in the axial direction of the rotor core in the related art, can be dispersedly disposed on both sides in the axial direction by the one side crossover wires 32 disposed on one side in the axial direction (Z1 direction) of the rotor core 2 and the other side crossover wires 33 disposed on the other side in the axial direction (Z2 direction) of the rotor core 2, and thus it is possible to avoid contact between the crossover wires. Therefore, it is not necessary to consider ensuring the insulation at a position where the crossover wires are in contact with each other, and thus it is possible to improve the space factor of the conductor in the slot 21 by thinning the coil film while ensuring the insulation between the crossover wires (the one side crossover wires 32 and the other side crossover wires 33). In addition, as the space factor of the conductor in the slot 21 is improved, it is possible to reduce a size of a motor (rotor 102) in the axial direction to implement minimization when the same performance is obtained. That is, a total thickness of the plurality of electromagnetic steel sheets stacked to form the rotor core 2 can be reduced.

In the present embodiment, as described above, the coil 3 includes the plurality of one side crossover wires 32 and the plurality of the other side crossover wires 33, and is a single continuous coil wound around the plurality of teeth 20. In the coil 3, the winding portion 34 and the one side crossover wire 32 are alternately and continuously formed between the one end lead portion 30 introduced to the tooth 20 as the winding start of the coil 3 and the predetermined halfway position M of the coil 3, and the winding portion 34 and the other side crossover wire 33 are alternately and continuously formed between the other end lead portion 31 led out from the tooth 20 as the winding end of the coil 3 and the predetermined halfway position M of the coil 3. Accordingly, the number of components can be reduced and a device configuration can be simplified as compared with a case where there are a plurality of coils. Further, winding work of the coil 3 can be performed only by alternately repeating the formation of the winding portion 34 and the one side crossover wire 32 on the one end lead portion 30 side, and the winding work of the coil 3 can be performed only by alternately repeating the formation of the winding portion 34 and the other side crossover wire 33 on the other end lead portion 31 side. That is, since a work stage for forming the one side crossover wire 32 and a work stage for forming the other side crossover wire 33 can be separated, workability can be improved as compared with a case where the winding portion, the one side crossover wire, and the other side crossover wire are repeatedly formed.

In the present embodiment, as described above, the tooth 20a around which the one end lead portion 30 is wound and the tooth 20f around which the other end lead portion 31 is wound are disposed to be apart from each other in the circumferential direction with at least one tooth (20g, 20h) interposed therebetween. Accordingly, in the coil 3, the one end lead portion 30 and the other end lead portion 31 having a particularly large voltage difference due to the internal resistance of the coil 3 caused by a large coil length therebetween can be apart from each other with at least one tooth (20g, 20h) interposed therebetween to ensure the insulation.

In the present embodiment, as described above, the tooth 20 includes the first tooth T1 (the tooth 20g) and the second tooth T2 (the tooth 20f) adjacent to each other, the slot 21 includes the intermediate slot S (the slot 21f) disposed between the first tooth T1 and the second tooth T2, the coil 3 is wound around the first tooth T1 such that the number of turns on the intermediate slot S side in the circumferential direction of the first tooth T1 is larger by one than the number of turns on the side opposite to the intermediate slot S side in the circumferential direction of the first tooth T1, the coil 3 is wound around the second tooth T2 such that the number of turns on the intermediate slot S side in the circumferential direction of the second tooth T2 is smaller by one than the number of turns on the side opposite to the intermediate slot S side in the circumferential direction of the second tooth T2, and the number of turns on the side opposite to the intermediate slot S side in the circumferential direction of the first tooth T1 is equal to the number of turns on the side opposite to the intermediate slot S side in the circumferential direction of the second tooth T2. Accordingly, when the coil 3 is led out from one side to the other side in the axial direction in order to form not only the one side crossover wire 32 but also the other side crossover wire 33, the number of turns of the winding portion 34 on the first tooth T1 on one side in the circumferential direction (intermediate slot S side) is different from that on the other side in the circumferential direction, but the total number of turns in the intermediate slot S can be matched with the total number of turns in each of other slots 21 by making the number of turns of the winding portion 34 on the second tooth T2 on one side in the circumferential direction also different from that on the other side in the circumferential direction (intermediate slot S side). In short, a deviation in the number of turns in the intermediate slot S in the winding portion 34 on the first tooth T1 can be corrected by a deviation in the number of turns in the intermediate slot S in the winding portion 34 on the second tooth T2. As a result, it is possible to prevent the balance during the rotation of the rotor 102 from collapsing.

In the present embodiment, as described above, the one side crossover wire 32 is connected to the winding portion 34 on the first tooth T1 from the one side end surface 2a side in the axial direction and the intermediate slot S side in the circumferential direction, the other side crossover wire 33 is connected to the winding portion 34 on the first tooth T1 from the other side end surface 2b side in the axial direction and the intermediate slot S side in the circumferential direction, the one end lead portion 30 or the other end lead portion 31 is connected to the winding portion 34 on the second tooth T2 from the one side end surface 2a side in the axial direction and the side opposite from the intermediate slot S side in the circumferential direction, and the other side crossover wire 33 is connected to the winding portion 34 on the second tooth T2 from the other side end surface 2b side in the axial direction and the side opposite to the intermediate slot S side in the circumferential direction. Accordingly, the deviation in the number of turns in the intermediate slot S in the winding portion 34 on the first tooth T1 is corrected by that in the winding portion 34 on the second tooth T2 to which the one end lead portion 30 or the other end lead portion 31 is connected, and it is possible to prevent the balance during the rotation of the rotor 102 from collapsing.

In the present embodiment, as described above, the plurality of one side crossover wires 32 are disposed on the one side end surface 2a side in the axial direction so as to be apart from each other without contacting each other, and the plurality of the other side crossover wires 33 are disposed on the other side end surface 2b side in the axial direction so as to be apart from each other without contacting each other. Accordingly, since the insulation between the plurality of one side crossover wires 32 and the insulation between the plurality of the other side crossover wires 33 can be ensured, it is possible to further improve the space factor of the conductor in the slot 21 by further thinning the coil film while ensuring the insulation between the crossover wires.

### Modification

The embodiments disclosed here should be considered to be illustrative and not restrictive in all respects. The scope disclosed here is indicated not by the description of the above embodiment but by the claims, and all changes (modifications) within the meaning and scope equivalent to the claims are included.

For example, the above embodiment shows the example in which the rotor core 2 includes eight slots 21 and eight teeth 20, but this disclosure is not limited thereto. In this disclosure, the rotor core may include a number of slots and teeth different from eight.

The above embodiment shows the example in which the coil 3 is formed of the round wire, but this disclosure is not limited thereto. In this disclosure, the coil may be formed of a wire having a shape different from the round wire, such as a flat wire.

The above embodiment shows the example in which the coil is connected to the winding portions 34 wound around the tooth 20 at the winding end position of the coil 3 from both sides in the axial direction, but this disclosure is not limited thereto. In this disclosure, the coil may be connected to the winding portion wound around a tooth at a position of the winding start of the coil instead of the winding end of the coil from both sides in the axial direction.

The above embodiment shows the example in which the rotor includes only one coil, but this disclosure is not limited thereto. In this disclosure, the rotor may include a plurality of coils.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A wound field rotating electrical machine comprising:
a stator (101); and
a rotor (102) disposed to face the stator in a radial direction, wherein
the rotor includes a rotor core (2) including a plurality of teeth (20) and a plurality of slots (21) disposed in a circumferential direction, and a coil (3) as a field winding wound around each of the teeth, and
the coil includes
a one side crossover wire (32) disposed along a one side end surface (2a) of the rotor core in an axial direction and connecting two first winding portions wound respectively in a concentrated manner around two of the teeth which are not adjacent to each other, and
an other side crossover wire (33) disposed along an other side end surface (2b) of the rotor core in the axial direction and connecting two second winding portions that are different from the first winding portions and that are wound respectively in a concentrated manner around two of the teeth which are not adjacent to each other.

2. The wound field rotating electrical machine according to claim 1, wherein
the coil includes a plurality of one side crossover wires and a plurality of other side crossover wires, and is a single continuous coil wound around the plurality of teeth, and
the coil is formed such that
the first winding portions and the one side crossover wires are alternately and continuously formed between a one end lead portion (30) introduced to one of the teeth as a winding start of the coil and a predetermined halfway position (M) of the coil, and
the second winding portions and the other side crossover wires are alternately and continuously formed between an other end lead portion (31) led out from one of the teeth as a winding end of the coil and the predetermined halfway position of the coil.

3. The wound field rotating electrical machine according to claim 2, wherein
the tooth around which the one end lead portion is wound and the tooth around which the other end lead portion is wound are disposed to be apart from each other in the circumferential direction with at least one of the teeth interposed therebetween.

4. The wound field rotating electrical machine according to any one of claims 1 to 3, wherein
the teeth include a first tooth (T1) and a second tooth (T2) adjacent to each other,
the slots include an intermediate slot (S) disposed between the first tooth and the second tooth,
the coil is wound around the first tooth such that the number of turns on an intermediate slot side in the circumferential direction of the first tooth is larger by one than the number of turns on a side opposite to the intermediate slot side in the circumferential direction of the first tooth,
the coil is wound around the second tooth such that the number of turns on the intermediate slot side in the circumferential direction of the second tooth is smaller by one than the number of turns on the side opposite to the intermediate slot side in the circumferential direction of the second tooth, and
the number of turns on the side opposite to the intermediate slot side in the circumferential direction of the first tooth is equal to the number of turns on the side opposite to the intermediate slot side in the circumferential direction of the second tooth.
